# EUROPÄISCHE PATENTSCHRIFT

(11) **EP 2 014 025 B1**
(45) Veröffentlichungstag und Bekanntmachung des Hinweises auf die Patenterteilung: **23.03.2011**
(21) Anmeldenummer: 07724521.5
(22) Anmeldetag: 24.04.2007
(51) Int. Cl.: H04L 12/42

(54) **SCHNITTSTELLENEINHEIT UND KOMMUNIKATIONSSYSTEM MIT EINER MASTER-SLAVE-STRUKTUR**
INTERFACE UNIT AND COMMUNICATION SYSTEM HAVING A MASTER/SLAVE STRUCTURE
UNITÉ D'INTERFACE ET SYSTÈME DE COMMUNICATION À STRUCTURE MAÎTRE-ESCLAVE

(30) Priorität: 24.04.2006 DE 102006018884
(43) Veröffentlichungstag der Anmeldung: 14.01.2009
(73) Patentinhaber: Beckhoff Automation GmbH, 33415 Verl (DE)
(72) Erfinder: BECKHOFF, Hans, 33415 Verl (DE); JANSSEN, Dirk, 33415 Verl (DE)
(74) Vertreter: Patentanwaltskanzlei WILHELM & BECK
(86) Internationale Anmeldenummer: PCT/EP2007/003591
(87) Internationale Veröffentlichungsnummer: WO 2007/121984

(56) Entgegenhaltungen:
- WO-A-2004/084451
- GB-A- 2 207 326
- US-A1- 2004 008 720

## Beschreibung

Die Erfindung betrifft eine Schnittstelleneinheit für ein Kommunikationssystem mit einer Master-Slave-Struktur, bei der die Schnittstelleneinheit eine Mehrzahl von Slave-Einheiten über eine gegenläufig arbeitende Doppelringstruktur miteinander verbindet und ein solches Kommunikationssystem mit einer Master-Slave-Struktur.

In der Fertigungs- und Automatisierungstechnik werden zunehmend serielle Bussysteme eingesetzt, bei denen die dezentral angeordneten Geräte einer Maschinenperipherie wie E/A-Module, Messumformer, Antriebe, Ventile und Bedienerterminals über ein leistungsfähiges Echtzeit-Kommunikationssystem mit Automatisierungs-, Engineering- oder Visualisierungssystemen kommunizieren. Alle Teilnehmer sind dabei über einen seriellen Bus, vorzugsweise über einen Feldbus miteinander vernetzt, wobei der Datenaustausch über den Bus in der Regel auf der Grundlage des Master-Slave-Prinzips ausgeführt wird.

Die aktiven Busteilnehmer am Bussystem, in der Regel die Steuergeräte, sind im Besitz einer Buszugriffsberechtigung und bestimmen den Datentransfer auf dem Bus. Die aktiven Busteilnehmer werden als die Master-Einheiten im seriellen Bussystem bezeichnet. Passive Busteilnehmer sind dagegen in der Regel Maschinenperipheriegeräte. Sie erhalten keine Buszugriffsberechtigung, d.h. sie dürfen nur empfangene Informationssignale quittieren oder auf Anfrage einer Master-Einheit Informationssignale an diese übermitteln. Die passiven Busteilnehmer werden als Slave-Einheiten im seriellen Bussystem bezeichnet.

Feldbussysteme mit einer Master-Slave-Struktur werden im Allgemeinen, um eine aufwändige Verkabelung zu vermeiden, in Ringtopologie ausgeführt, wobei alle Busteilnehmer an einen ringförmigen Übertragungsweg angeschlossen sind. Ein von der Master-Einheit erzeugtes Informationssignal wird von der Master-Einheit in den ringförmigen Übertragungsweg eingespeist und durchläuft nacheinander die seriell an den ringförmigen Übertragungsweg angeschlossenen Slave-Einheiten, um dann wieder von der Master-Einheit empfangen und ausgewertet zu werden. Master-Slave-Systeme können dabei auch als Multi-Mastersysteme ausgelegt sein.

Die Informationssignale werden von der Master-Einheit in der Regel in Datenpakete organisiert, die sich aus Steuerdaten und Nutzdaten zusammensetzen, wobei vorzugsweise der Ethernet-Standard verwendet wird, der Dätenpakete mit einer Länge von bis zu 1500 Byte bei einer gleichzeitig hohen Übertragungsgeschwindigkeit von 100 Mbit/sec ermöglicht. Jede der an den ringförmigen Übertragungsweg angeschlossenen Slave-Einheiten tauscht beim Durchlauf des von der Master-Einheit eingespeisten Ethernet-Telegramms auf dem ringförmigen Übertragungsweg die für ihn bestimmten Nutzdaten mit dem Ethernet-Telegramm aus.

Die Master-Slave-Kommunikationssysteme mit Ringstruktur sind in der Regel so aufgebaut, dass die Master-Einheit eine Sendeeinheit als Dateneinkoppelstelle und eine Empfangseinheit als Datenauskoppelstelle aufweist. Die einzelnen Slave-Einheiten sind dann am Übertragungsweg zu einer Kette zusammengeschlossen, wobei jeder Teilnehmer mit zwei Nachbarn, der erste und der letzte Teilnehmer in der Kette dabei mit der Master-Einheit verbunden ist. Die Übertragung der Datenpakete erfolgt dabei in eine Richtung ausgehend von der Master-Einheit über deren Sendeeinheit zur ersten angeschlossenen Slave-Einheit und von dort zur nächsten, bis die letzte Slave-Einheit in der Kette erreicht ist, und dann zurück zur Empfangseinheit der Master-Einheit. Jede Slave-Einheit weist zum Empfang der umlaufenden Datenpakete vom vorherigen Teilnehmer eine Schnittstelle mit einer Empfangseinheit und zur Weitergabe an den nachfolgenden Teilnehmer eine Schnittstelle mit einer Sendeeinheit auf, wobei zwischen Empfangs- und Sendeeinheit eine Verarbeitungseinheit angeordnet ist, um die durch die Slave-Einheit durchlaufenden Datenpakete zu verarbeiten, d.h. mit den Datenpaketen die der Slave-Einheit zugeordneten Nutzdaten auszutauschen.

Die ringförmigen Kommunikationssysteme mit Master-Slave-Struktur sind dabei oft so ausgelegt, dass die Master-Einheit mit den daran angeordneten Slave-Einheiten eine physikalische Linie bildet, wobei das Übertragungsmedium eine Doppelleitungsstruktur und jede Slave-Einheit zwei Ports mit einer kombinierten Sende-Empfangseinheit aufweist, wobei im Ausgangsport der letzten Slave-Einheit in der Übertragungskette Sende- und Empfangseinheit kurzgeschlossen sind. Die von der Master-Einheit über deren Empfangseinheit in die erste Leitung eingekoppelten Datenpakete werden von den Slave-Einheiten auf dem Hinweg bearbeitet und auf dem Rückweg über die zweite Leitung dann einfach nur an die Empfangseinheit der Master-Einheit weitergeleitet.

Eine zentrale Anforderung an Master-Slave-Kommunikationssysteme, insbesondere beim Einsatz in der Fertigungs- und Prozessautomatisierung, ist eine hohe Fehlertoleranz, also die Fähigkeit des Kommunikationssystems, trotz des Auftretens von Fehlern die geforderte Funktion, d.h. zum Beispiel die Herstellung eines Werkstücks aufrecht zu erhalten. Fehler im Kommunikationssystem, die ohne Beeinträchtigung des Prozesses überstanden werden müssen, sind dabei neben Fehlern in den Datenpaketen insbesondere auch der Ausfall ganzer Übertragungsstrecken, beispielsweise durch physikalisches Durchtrennen des Übertragungsmediums.

Um ein fehlertolerantes Master-Slave-Kommunikationssystem, insbesondere bei Streckenfehlern, d.h. beim Ausfall ganzer Übertragungsabschnitte, zu erreichen, werden oft gegenläufig arbeitende Doppelringstrukturen eingesetzt. So ist in der US 4,663,748 ein Kommunikationssystem mit einer Master-Slave-Struktur beschrieben, bei dem die Master-Einheit mit einer Mehrzahl von Slave-Einheiten seriell über zwei gegenläufig arbeitende Kommunikationspfade verbunden ist, wobei die Master-Einheit die Datenpakete gleichzeitig über beide Kommunikationspfade versendet. Die Slave-Einheit besitzt dann zwei Verarbeitungseinheiten, die jeweils zwischen die beiden Kommunikationspfade geschaltet sind, um die durchlaufenden Datentelegramme zu verarbeiten. Weiterhin sind in den Teilnehmern aktivierbare Kopplungseinheiten angeordnet, um bei Auftreten eines Streckenfehlers, z.B. dem Bruch einer Kommunikationsleitung, durch Signalüberwachung der Signale auf beiden Übertragungsringen und entsprechendes Umschalten das Kommunikationssystem so zu rekonfigurieren, dass ein durch den Streckenfehler bedingter Ausfall eines größeren Abschnitts des Kommunikationssystems oder sogar ein Gesamtausfall vermieden wird.

In der DE 103 12 907 A1 ist weiterhin vorgeschlagen, die Slave-Einheit so auszubilden, dass in jedem Kommunikationspfad in Datenübertragungsrichtung zuerst eine Verarbeitungseinheit und dann ein Multiplexer mit zwei Eingängen und einem Ausgang angeordnet ist. Der Multiplexer ist dabei mit seinen Eingängen jeweils mit den beiden Verarbeitungseinheiten der Slave-Einheit verbunden und mit seinem Ausgang an den zugeordneten Kommunikationspfad angeschlossen. Im störungsfreien Normalbetrieb schaltet jeder der beiden Multiplexer die im zugeordneten Kommunikationspfad angeordnete Verarbeitungseinheit durch. Im Störbetrieb, bei Auftreten eines Streckenfehlers im zugeordneten Kommunikationspfad, wird dann jedoch die Verarbeitungseinheit im anderen Kommunikationspfad durchgeschaltet. Diese Auslegung der Slave-Einheit ermöglicht es, im Störfall im Wesentlichen in Echtzeit das Kommunikationssystem zu rekonfigurieren.

Fehlertolerante Master-Slave-Kommunikationssysteme mit einer Doppelringstruktur, bei denen die Master-Einheit jeweils zwei Sende- und Empfangseinrichtungen mit entsprechenden Sendern bzw. Empfängern und zugehörigen Steuerungen, um Datenpakete auf die beiden Kommunikationspfade auszugeben, aufweisen, sorgt für einen hohen Hardware- und Schaltaufwand der Master-Einheit und erhöht somit wesentlich die Kosten. Dies gilt auch für die Slave-Einheiten, die jeweils zwei Verarbeitungseinheiten zur Verarbeitung der durchlaufenden Datenpakete enthalten. Jede Slave-Einheit muss darüber hinaus im Normalbetrieb entscheiden, welche der beiden durch die zwei Verarbeitungseinheiten durchlaufenden Datenpakete zur Gerätesteuerung genutzt werden soll, was bei den geforderten hohen Datenübertragungsraten den Einsatz solcher Kommunikationssysteme stark beschränkt. Darüber hinaus ist es bei den bekannten fehlertoleranten Kommunikationssystemen mit Doppelringtopologie erforderlich, dass die Master-Einheit auf jeden Streckenfehler gesondert reagiert und vom Normalbetrieb in einen Störmodus umschaltet.

Die US 2004/008720 A1 zeigt eine Mastereinheit mit einer ersten Schalteinheit und einer zweiten Schalteinheit. Die erste Schalteinheit weist einen Eingang und zwei Ausgänge auf, wobei der Eingang mit den beiden Verarbeitungseinheiten der Mastereinheit und die beiden Ausgänge jeweils mit einer Sendeeinheit der Mastereinheit verbunden sind. Die zweite Schalteinheit weist zwei Eingänge und einen Ausgang auf, wobei die beiden Eingänge jeweils mit einer Empfangseinheit und der Ausgang mit den Verarbeitungseinheiten der Mastereinheit verbunden sind.

Aufgabe der vorliegenden Erfindung ist es, eine Schnittstelle für ein Kommunikationssystem mit einer Master-Slave-Struktur zum Verbinden einer Master-Einheit seriell mit einer Mehrzahl von Slave-Einheiten über eine Doppelringstruktur und ein entsprechendes Kommunikationssystem bereitzustellen, die sich durch einen minimalen Hardware- und Schaltaufwand und die Möglichkeit einer Rekonfiguration in Echtzeit bei Auftreten von Streckenfehlern in der Doppelringtopologie auszeichnen.

Diese Aufgabe wird durch eine Schnittstelleneinheit gemäß Anspruch 1 gelöst. Bevorzugte Weiterbildungen sind in den abhängigen Ansprüchen angegeben.

Erfindungsgemäß ist eine Schnittstelle für ein Kommunikationssystem mit einer Master-Slave-Struktur, die eine Master-Einheit seriell mit einer Mehrzahl von Slave-Einheiten über eine aus einem ersten Kommunikationspfad und einem zweiten Kommunikationspfad gebildete gegenläufig arbeitende Doppelringstruktur verbindet, vorgesehen. Die Schnittstelleneinheit weist dabei eine erste Schalteinheit auf, deren Eingang mit einer Sendeeinheit der Master-Einheit, deren erster Ausgang mit dem ersten Kommunikationspfad und deren zweiter Ausgang mit dem zweiten Kommunikationspfad verbunden ist und die ausgelegt ist, ein von der Sendeeinheit der Master-Einheit empfangenes Informationssignal zum getrennten gegenläufigen Senden auf den ersten Kommunikationspfad und den zweiten Kommunikationspfad auszugeben. Ferner ist eine zweite Schalteinheit in der Schnittstelleneinheit vorgesehen, deren erster Eingang mit dem ersten Kommunikationspfad, deren zweiter Eingang mit dem zweiten Kommunikationspfad und deren Ausgang mit einer Empfangseinheit der Master-Einheit verbunden ist und die ausgelegt ist, die beiden auf dem ersten Kommunikationspfad und dem zweiten Kommunikationspfad gegenläufig umlaufenden Informationssignale an die Empfangseinheit der Master-Einheit weiterzuleiten.

Mit dieser erfindungsgemäßen Auslegung der Schnittstelle zwischen der Master-Einheit und den Slave-Einheiten in einem fehlertoleranten Kommunikationssystem mit einer Doppelringtopologie können der Hard- und Softwareaufwand und damit die Kosten wesentlich reduziert werden. Durch den Einsatz einer in der erfindungsgemäßen Weise ausgebildeten Schnittstelleneinheit ist es möglich, auch in einer Doppelringstruktur eine herkömmliche Master-Einheit zu verwenden, wie sie in einer Einfachringarchitektur eingesetzt wird und die nur eine Sende- und Empfangseinheit aufweist. Die erfindungsgemäße Schnittstelleneinheit sorgt dafür, dass auch mit einer für eine Einfachringstruktur konzipierten Master-Einheit Datenpakete auf den beiden gegenläufig arbeitenden Kommunikationspfaden der Doppelringstruktur umlaufen können.

Gemäß einer bevorzugten Ausführungsform ist die Schnittstelleneinheit dabei intelligent ausgelegt, und zwar so, dass sie ein von der Sendeeinheit der Master-Einheit empfangenes Informationssignal zum getrennten gegenläufigen Senden auf den ersten und zweiten Kommunikationspfaden der Doppelringstruktur dupliziert. Durch das Senden zweier identischer Datenpakete auf den beiden gegenläufigen Kommunikationspfaden wird eine hohe Fehlertoleranz gegenüber Streckenfehlern in der Doppelringstruktur erreicht.

Dies gilt auch für eine zweite bevorzugte Ausführungsform, bei der die erste Schalteinheit der Schnittstelleneinheit so ausgelegt ist, dass eine Adresseninformation im von der Sendeeinheit der Master-Einheit empfangenen Informationssignal ausgewertet wird, um das Informationssignal wechselweise auf dem ersten Kommunikationspfad und dem zweiten Kommunikationspfad zu versenden. Diese Auslegung ermöglicht es, zwei identische und damit redundante Informationssignale gegenläufig über die Doppelringstruktur umlaufen zu lassen, was eine hohe Fehlertoleranz gewährleistet.

Gemäß einer weiteren bevorzugten Ausführungsform ist die zweite Schalteinheit der Schnittstelleneinheit ausgelegt, die beiden im ersten und zweiten Kommunikationspfad gegenläufig umlaufenden Informationssignale auszuwerten. Hierdurch kann die Funktionsfähigkeit des Kommunikationssystems auf einfache Weise, insbesondere auch im redundanten Fall, also dann, wenn die Kommunikationssysteme aufgrund eines Streckenfehlers rekonfiguriert sind und einzelne Slave-Einheiten auf den Fehlerbetrieb umgeschaltet haben, gewährleistet werden.

Alternativ kann die zweite Schalteinheit der Schnittstelleneinheit aber auch so ausgelegt sein, dass die beiden auf dem ersten und dem zweiten Kommunikationspfad empfangenen Datenpakete nacheinander an die Empfangseinheit der Master-Einheit zum Auswerten weitergeleitet werden. Die Redundanz beim Auftreten des Fehlerfalls wird dann statt durch Auswerten in der Schnittstelleneinheit durch Auswerten in der Master-Einheit erreicht werden. Bevorzugt ist es dabei, dass die zweite Schalteinheit der Schnittstelleneinheit einen FIFO-Mechanismus aufweist, um so Kollisionen der nacheinander zur Master-Einheit rückgekoppelten Informationssignale zu verhindern.

Erfindungsgemäß ist die Kommunikation mit der Master-Slave-Struktur so ausgelegt, dass die Master-Einheit eine Sendesteuereinheit aufweist, die über die Sendeeinheit der Master-Einheit zwei Informationssignale mit einem identischen Datenfeld, das für jede angeschlossene Slave-Einheit einen zugeordneten Datenbereich aufweisen kann, und mit einem unterschiedlichen Adressenfeld an die erste Schalteinheit der Schnittstelleneinheit sendet. Die erste Schalteinheit der Schnittstelleneinheit ist dann weiter so ausgelegt, dass auf der Grundlage des Inhalts des Adressenfeldes das eine Informationssignal auf dem ersten Kommunikationspfad und das andere Informationssignal auf dem zweiten Kommunikationspfad ausgegeben wird. In jeder in der Doppelringstruktur angeordneten Slave-Einheit ist eine aktivierbare Kopplungseinrichtung vorgesehen, die im Normalbetrieb den Eingang einer Verarbeitungseinheit mit einer ersten Empfangseinrichtung, den Ausgang der Verarbeitungseinheit mit einer ersten Sendeeinheit und eine zweite Empfangseinheit mit einer zweiten Sendeeinheit verbindet. Im Fehlerfall der ersten Sendeeinheit und/oder der zweiten Empfangseinheit wird dann der Eingang der Verarbeitungseinheit mit der ersten Empfangseinheit und der Ausgang der Verarbeitungseinheit mit der zweiten Empfangseinheit verbunden. Im Fehlerfall der ersten Empfangseinheit und/oder der zweiten Sendeeinheit wird dagegen der Eingang der Verarbeitungseinheit mit der zweiten Empfangseinheit und der Ausgang der Verarbeitungseinheit mit der ersten Sendeeinheit verbunden. Die Verarbeitungseinheit jeder Slave-Einheit ist weiterhin so ausgelegt, dass beim Verarbeiten des durchlaufenden Informationssignals der der Slave-Einheit zugeordnete Datenbereich verarbeitet wird. In der zweiten Schalteinheit der Schnittstelleneinheit werden dann die beiden gegenläufig umlaufenden Informationssignale nacheinander an die Empfangseinheit der Master-Einheit weitergeleitet, wobei eine Empfangssteuereinheit der Master-Einheit ausgelegt ist, die Datenfelder der beiden von der Empfangseinheit empfangenen Informationssignale zu überlagern. Durch diese Auslegung wird ein hoch fehlertolerantes Kommunikationssystem auf einfache Weise gebildet, da sich bei Streckenfehlern durch Verändern des Datenpaketweges in den angrenzenden Slave-Einheiten das Kommunikationssystem schnell rekonfigurieren lässt, wobei die beiden redundant umlaufenden Datenpakete in der Empfangssteuereinheit der Master-Einheit überlagert werden, um zuverlässig einen Informationsverlust auch im Fehlerbetrieb zu vermeiden.

Alternativ kann eine solche Fehlertoleranz im Kommunikationssystem auch erreicht werden, indem eine intelligente Schnittstelle eingesetzt wird, die ein von der Sendeeinheit der Master-Einheit empfangenes Informationssignal dupliziert, wobei dann die beiden umlaufenden Datenpakete nach dem Empfang von der Schnittstelleneinheit überlagert werden, um so im Fehlerbetrieb der Slave-Einheiten zuverlässig einen Verlust von Daten zu verhindern.

Um die Störungsfreiheit im Kommunikationssystem zu überwachen, insbesondere auch bei einer Rekonfiguration des Kommunikationssystems nach Auftreten eines Streckenfehlers, weisen gemäß einer bevorzugten Ausführungsform die Informationssignale ein zusätzliches, auf einen vorgegebenen Wert gesetztes Zählerfeld auf, das von der Verarbeitungseinheit der Slave-Einheit jeweils beim Durchlauf um einen vorgegebenen Wert verändert wird. Die zweite Schalteinheit der Schnittstelleneinheit oder alternativ die Empfangssteuereinheit der Master-Einheit addieren den Wert der Zählerfelder der beiden gegenläufig umgelaufenen Informationssignale auf. Durch Auswerten dieses Wertes kann dann festgestellt werden, ob Streckenfehler im Kommunikationssystem aufgetreten sind, bzw. ob eine Slave-Einheit ausgefallen ist.

Die Erfindung wird anhand der beigefügten Zeichnungen näher erläutert.

Es zeigt
Fig. 1 eine schematische Darstellung eines erfindungsgemäßen Kommunikationssystems mit einer Master-Slave-Struktur, bei der eine Schnittstelleneinheit zwischen der Master-Einheit und dem seriell in einer Doppelringstruktur verbundenen Slave-Einheit vorgesehen ist, wobei
Fig. 1A den Normalbetrieb,
Fig. 1B einen ersten Kommunikationssystem-Rekonfigurationsbetrieb bei Auftreten eines Streckenfehlers,
Fig. 1C einen zweiten Kommunikationssystem-Rekonfigurationsbetrieb bei Ausfall einer Slave-Einheit darstellt; und
Fig. 2 eine schematische Darstellung einer Slave-Einheit gemäß der Erfindung.

In der Automatisierungstechnik werden zunehmend Feldbussysteme eingesetzt, bei denen verteilt angeordnete Geräte der Maschinenperipherie mit Automatisierungs-, Engineerings- und Visualisierungssystemen über einen Feldbus kommunizieren. Das Feldbussystem weist in der Regel einen seriellen Bus auf, welcher beispielsweise eine elektrische Leitung, ein Lichtleiter oder ein Radiokabel sein kann. An diesen Feldbus sind dann alle Busteilnehmer angeschlossen, wobei zwischen aktiven und passiven Busteilnehmern unterschieden wird. Die aktiven Busteilnehmer am Feldbussystem sind die Master-Einheiten, die den Datenverkehr auf dem Bus bestimmen. Eine solche Master-Einheit ist zum Beispiel ein Industrie-PC, der als Prozessleitrechner in einem Fertigungsverfahren dient. Diese Master-Einheit besitzt eine Buszugriffsberechtigung und kann Daten ohne externe Aufforderung auf den Feldbus ausgeben. Die passiven Busteilnehmer am Bussystem sind Maschinenperipheriegeräte, beispielsweise E/A-Geräte, Ventile, Antriebe und Messumformer. Sie dienen als Slave-Einheiten und erhalten keine Buszugriffsberechtigung, d.h. sie dürfen nur empfangene Informationssignale quittieren oder auf Anfrage einer Master-Einheit Informationssignale an diese übermitteln.

Als Kommunikationsstandard zur Datenübertragung im Master-Slave-System wird vorzugsweise das Ethernet-Konzept eingesetzt. Bei Ethernet-Kommunikationssystemen werden die zu übermittelnden Daten als Informationssignale in Datenpaketen, im weiteren auch als Telegramme bezeichnet, mit einem vorgegebenen Format verkapselt. Die Ethernet-Telegramme können dabei eine Datenlänge von bis zu 1500 Bytes aufweisen, wobei zusätzlich zu den Nutzdaten Steuerdaten, die eine Anfangskennung, eine Ziel- und Quelladresse, den Datenpaket-Typ und einen Fehlermechanismus aufweisen, enthalten sind.

Ethernet-Kommunikationssysteme mit einer Master-Slave-Struktur sind bevorzugt so ausgelegt, dass die einzelnen Slave-Einheiten über das Übertragungsmedium zu einer Kette zusammengeschlossen sind, wobei jede Slave-Einheit mit zwei Nachbarn, der erste und der letzte Teilnehmer in der Kette dabei mit der Master-Einheit verbunden ist, so dass sich eine Ringstruktur ergibt. Die Datenübertragung erfolgt dabei in eine Richtung ausgehend von der Master-Einheit zur ersten benachbarten Slave-Einheit und von dort zur nächsten bis zur letzten Slave-Einheit und dann zurück zur Master-Einheit.

Um eine hohe Fehlertoleranz insbesondere bei einem Streckenfehler im Kommunikationssystem, d.h. dem Ausfall ganzer Übertragungsabschnitte mit Slave-Einheiten, z.B. durch Kabelbruch, zu gewährleisten, weisen die Kommunikationssysteme mit einer Master-Slave-Struktur oft zwei Kommunikationspfade auf, die gegenläufig zueinander arbeiten. Durch die gegenläufig arbeitende Doppelringstruktur besteht bei Streckenfehlern die Möglichkeit, Rekonfigurationsmaßnahmen im Kommunikationssystem auszuführen, um die Funktionsfähigkeit des Kommunikationssystems trotz Streckenfehler aufrecht zu erhalten.

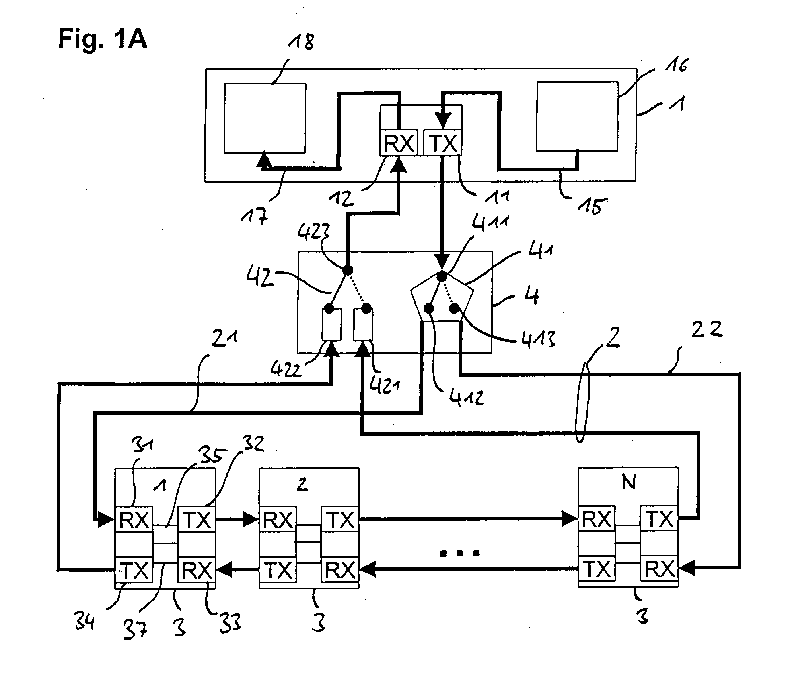

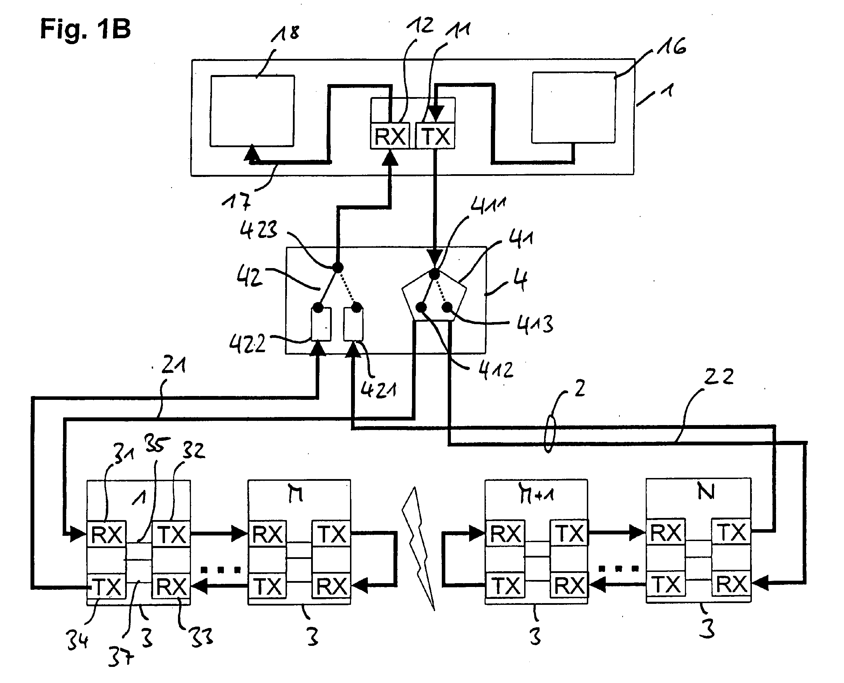

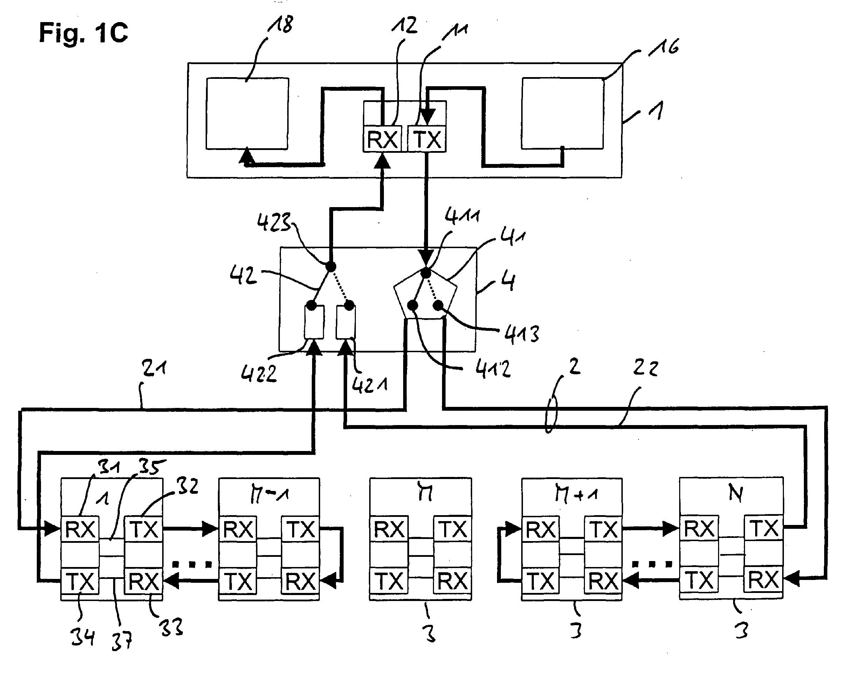

Fig. 1 zeigt in einem Prinzipschaltbild ein solches fehlertolerantes Kommunikationssystem einer erfindungsgemäßen Ausführungsform. Das Kommunikationssystem weist eine Master-Einheit 1 auf, die über eine Schnittstelleneinheit 4 mit einer Doppelringstruktur 2, in die N Slave-Einheiten 3 seriell eingebunden sind. Die Doppelringstruktur 2 umfasst zwei unidirektionale Kommunikationspfade 21, 22, die die angeschlossenen Slave-Einheiten 3 gegenläufig durchlaufen.

Die Schnittstelleneinheit 4 weist eine erste Schalteinheit 41 und eine zweite Schalteinheit 42 auf. Die erste Schalteinheit 41 ist mit einem Eingang 411 mit einer Sendeeinheit TX11 der Master-Einheit 1 verbunden. Ein erster Ausgang 412 der ersten Schalteinheit 41 ist an den ersten Kommunikationspfad 21 und ein zweiter Ausgang 413 der ersten Schalteinheit 41 an den zweiten Kommunikationspfad 22 angeschlossen. Die zweite Schalteinheit 42 der Schnittstelleneinheit 41 ist über einen ersten Eingang 421 mit dem ersten Kommunikationspfad 21 und über einen zweiten Eingang 422 mit dem zweiten Kommunikationspfad 22 verbunden. Der Ausgang 423 der zweiten Schalteinheit 42 der Schnittstelleneinheit 4 ist an eine Empfangseinheit RX 12 der Master-Einheit 1 angeschlossen. Die Sendeeinheit 11 der Master-Einheit 1 ist über eine erste Steuerleitung 15 mit einer Sendesteuereinheit 16 verbunden. Die Empfangseinheit 12 ist über eine zweite Steuerleitung 17 an eine Empfangssteuereinheit 18 angeschlossen.

Jede Slave-Einheit 3 weist zum Empfang von Ethernet-Telegrammen von einem vorherigen Teilnehmer über den ersten Kommunikationspfad 21 eine Schnittstelle mit einer ersten Empfangseinheit RX31 und zur Weitergabe an den nächsten Teilnehmer über den ersten Kommunikationspfad 21 eine Schnittstelle mit einer ersten Sendeeinheit TX32 auf. Weiterhin weist jede Slave-Einheit 3 zum Empfang eines umlaufenden Ethernet-Telegramms über den zweiten Kommunikationspfad 22 von einem vorherigen Teilnehmer eine Schnittstelle mit einer zweiten Empfangseinheit RX33 und zur Weitergabe an den nachfolgenden Teilnehmer eine Schnittstelle mit einer zweiten Sendeeinheit TX34 auf. Zwischen die erste Empfangseinheit RX31, die zweite Empfangseinheit RX32, die erste Sendeeinheit TX33 und die zweite Sendeeinheit TX34 ist in jeder Slave-Einheit 3 weiterhin eine Verarbeitungseinheit 35 und eine aktivierbare Kopplungseinrichtung 37 geschaltet.

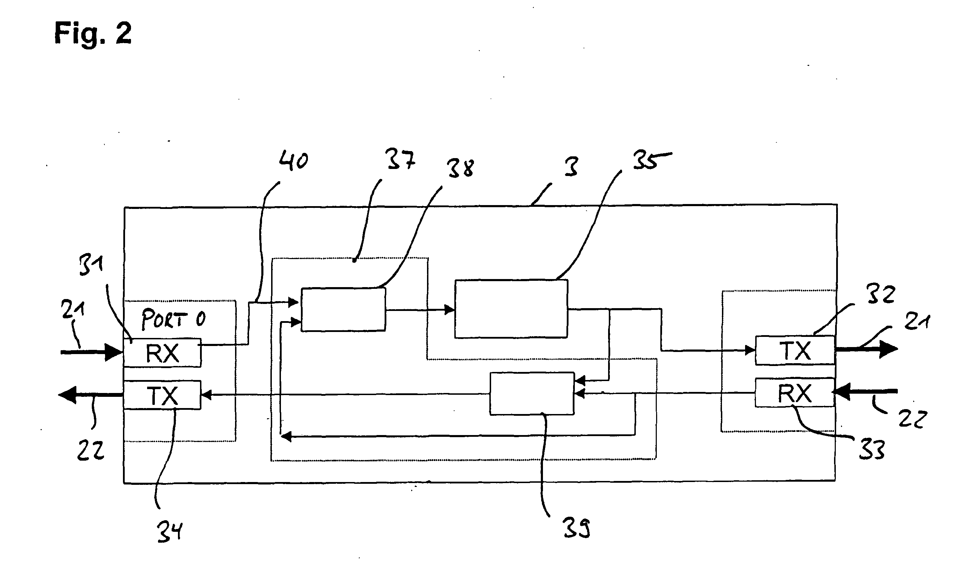

Das Prinzipschaltbild einer Slave-Einheit 3 ist in Figur 2 genauer dargestellt. In der Slave-Einheit 3 sind die erste Empfangseinheit RX31, die an den ersten Kommunikationspfad 21 angeschlossen ist, und die zweite Sendeeinheit TX34, die an den zweiten Kommunikationspfad 22 angeschlossen ist, als Port 0 gruppiert. Die zweite Empfangseinheit RX33, die an einen zweiten Kommunikationspfad 22 angeschlossen ist, und die erste Sendeeinheit TX32, die an den ersten Kommunikationspfad 21 angeschlossen ist, sind als Port 1 organisiert.

Die aktivierbare Kopplungseinrichtung 37 weist einen ersten Umschalter 38 und einen zweiten Umschalter 39 auf, die jeweils als 2-1-Multiplexer ausgelegt sind. Die Empfangs- und Sendeeinheiten 31, 32, 33, 34, die Multiplexer 38, 39 der aktivierbaren Kopplungseinrichtung 37 und die Verarbeitungseinheit 35 sind dabei in der durch Pfeile in Figur 2 gezeigten Weise über ein Leitungsnetz 40 miteinander verschaltet.

Der Ausgang der ersten Empfangseinheit RX31 ist mit dem ersten Eingang des ersten Multiplexers 38 verbunden. Der zweite Eingang des ersten Multiplexers 38 ist an die zweite Empfangseinheit RX33 angeschlossen. Der Ausgang des ersten Multiplexers 38 ist weiterhin mit der Verarbeitungseinheit 35 verbunden. Der zweite Multiplexer 39 ist wiederum mit seinem ersten Eingang an die zweite Empfangseinheit RX33 und mit seinem zweiten Eingang an den Ausgang der Verarbeitungseinheit 35 angeschlossen. Der Ausgang des zweiten Multiplexers 39 ist mit der zweiten Sendeeinheit TX34 verbunden. Außerdem ist der Ausgang der Verarbeitungseinheit 35 noch über das Leitungsnetz 40 mit der ersten Sendeeinheit TX32 verbunden. Beim störungsfreien Normalbetrieb des Kommunikationssystems, wie er in Figur 1A gezeigt ist, wird jeweils ein identisches Ethernet-Telegramm auf dem ersten Kommunikationspfad 21 und den zweiten Kommunikationspfad 22 ausgegeben. Die Telegramme durchlaufen dabei die angeschlossenen Slave-Einheiten 3 gegenläufig, wobei alle aktivierbaren Kopplungseinrichtungen 37 in den Slave-Einheiten 3 so geschaltet sind, dass der Eingang der Verarbeitungseinheit 35 mit der ersten Empfangseinheit RX31, der Ausgang der Verarbeitungseinheit 35 mit der ersten Sendeeinheit TX32 und die zweite Empfangseinheit RX33 mit der zweiten Sendeeinheit TX34 verbunden sind.

In diesem Betriebsmodus der Slave-Einheiten 3 sorgt die aktivierbare Kopplungseinrichtung 37 dafür, dass die beiden gegenläufig im ersten Kommunikationspfad 21 und im zweiten Kommunikationspfad 22 zirkulierenden identischen Telegramme die Slave-Einheit immer so durchlaufen, dass nur die über den ersten Kommunikationspfad 21 übertragenen Telegramme durch die Verarbeitungseinheit 35 verarbeitet werden. Das auf dem zweiten Kommunikationspfad 22 umlaufende Telegramm wird dagegen in den Slave-Einheiten 3 nur durchgereicht.

Bei der erfindungsgemäßen Auslegung wird also beim störungsfreien Normalbetrieb die aus den beiden 2-1-Multiplexern 38, 39 bestehende aktivierbare Kopplungseinrichtung 37 so gesteuert, dass von den beiden identischen Telegrammen die auf den beiden Kommunikationspfaden 21, 22 gleichzeitig, jedoch in entgegengesetzte Richtung zirkulieren, immer nur das Telegramm auf dem ersten Kommunikationspfad 21 durch die Verarbeitungseinheit 35 der Slave-Einheiten 3 zum Verarbeiten geleitet wird. Das auf dem zweiten Kommunikationspfad 22 umlaufende Telegramm dient zur Redundanz und wird unverändert rückgekoppelt.

Das erfindungsgemäße Kommunikationssystem mit einer Master-Slave-Struktur, bei der die Slave-Einheiten seriell mit der

Master-Einheit über ein Schnittstellenelement und zwei gegenläufig arbeitende Doppelringstrukturen verbunden sind, wobei nur eine einzelne Verarbeitungseinheit 35 in jeder Slave-Einheit 3 vorgesehen ist, besitzt weiterhin im Störfall, d.h. bei Auftreten eines Streckenfehlers, die Fähigkeit zur Rekonfiguration der Kommunikationspfade in den einzelnen Slave-Einheiten, um so die Funktionsfähigkeit des Gesamtkommunikationssystems aufrecht zu erhalten.

Figur 1B zeigt einen Streckendoppelfehler zwischen der Slave-Einheit M und der Slave-Einheit M+1. Figur 1C stellt einen Komplettausfall der Slave-Einheit M dar, was gleichbedeutend mit dem Auftreten von zwei Streckendoppelfehlern zwischen der Slave-Einheit M-1 und der Slave-Einheit M und zwischen der Slave-Einheit M+1 und der Slave-Einheit M ist. Beim Auftreten solcher Streckendoppelfehler wird die aktivierbare Kopplungseinrichtung 37 der Slave-Einheiten 3 so angesteuert, dass das entweder auf dem ersten Kommunikationspfad 21 oder dem zweiten Kommunikationspfad 22 eintreffende Telegramm auf dem jeweils anderen Kommunikationspfad rückgekoppelt wird, wobei das Telegramm vorher immer die Verarbeitungseinheit 35 der Slave-Einheit 3 durchläuft.

Bei dem in Figur 1B gezeigten Streckendoppelfehler zwischen der Slave-Einheit M und der Slave-Einheit M+1 erfolgt dies so, dass die Slave-Einheiten 1 bis M-1 und M+2 bis M sich im Normalbetrieb befinden, die Slave-Einheiten M und M+1 dagegen rekonfiguriert werden. Bei dem in Figur 1C gezeigten Fehlerfall, bei dem Slave-Einheit M ausfällt, befinden sich die Slave-Einheiten 1 bis M-2 und die Slave-Einheiten M+2 bis M im Normalbetrieb. Die Slave-Einheiten M-1 und M+1 dagegen werden rekonfiguriert.

Die Rekonfiguration wird dabei vorzugsweise durch die beiden Ports 0 und 1 in den Slave-Einheiten 3 ausgelöst. Diese beiden Ports 0 und 1 erkennen durch ein bekanntes Erkennungsverfahren, ob die Slave-Einheit mit einer angrenzenden Slave-Einheit kommunizieren kann. Wenn ein Streckenfehler vom Port 0 oder Port 1 erkannt ist, wird dann ein entsprechender Fehlerbetrieb durchgeführt und die aktivierbare Kopplungseinrichtung 34 der Slave-Einheit in der gewünschten Weise angesteuert.

Beim Fehlerbetrieb des Ports 1, wie er beim in Figur 1B gezeigten Streckendoppelfehler in der Slave-Einheit M bzw. beim in Figur 1C gezeigten Geräteausfall in der Slave-Einheit M-1 auftritt, wird die aktivierbare Kopplungseinrichtung 37 so angesteuert, dass der Eingang der Verarbeitungseinheit 35 mit der ersten Empfangseinheit RX31 und der Ausgang der Verarbeitungseinheit 35 mit der zweiten Sendeeinheit TX34 verbunden ist. Das auf dem ersten Kommunikationspfad 21 umlaufende Telegramm wird so über die Verarbeitungseinheit 35 auf den zweiten Kommunikationspfad 22 rückgekoppelt. Bei der in Figur 2 gezeigten Auslegung der aktivierbaren Kopplungseinrichtung 37 in der Slave-Einheit 3 mit dem ersten Multiplexer 38 und dem zweiten Multiplexer 39 erfolgt dies so, dass der zweite Eingang des zweiten Multiplexers 39 auf seinen Ausgang geschaltet wird. Der erste Multiplexer 38 dagegen verbleibt im Normalbetrieb.

Beim Fehlerbetrieb des Ports 0 in der Slave-Einheit 3, d.h. dann, wenn die erste Empfangseinheit RX31 und/oder die zweite Sendeeinheit TX34 eine Unterbrechung des Kommunikationspfads zur benachbarten Slave-Einheit erkennt, was bei dem in Figur 1B gezeigten Streckendoppelfehler im Slave M+1 und bei dem in Figur 1C gezeigten Geräteausfall im Slave M+1 auftritt, wird die aktivierbare Kopplungseinrichtung 37 in der Slave-Einheit 3 so angesteuert, dass der Eingang der Verarbeitungseinheit 35 mit der zweiten Empfangseinheit RX33 und der Ausgang der Verarbeitungseinheit 35 mit der ersten Sendeeinheit TX32 verbunden wird, so dass das auf dem zweiten Kommunikationspfad 22 durchlaufende Telegramm nach Verarbeitung in der Verarbeitungseinheit 35 auf dem ersten Kommunikationspfad 21 rückgekoppelt wird. Bei der in Figur 2 gezeigten Ausführung der aktivierbaren Kopplungseinrichtung 35 erfolgt dies so, dass der erste Multiplexer 38 seinen zweiten Eingang auf seinen Ausgang aufschaltet, wohingegen der zweite Multiplexer 39 im Normalbetrieb verbleibt.

Mit der erfindungsgemäßen Vorgehensweise ist es somit möglich, auf einfache Weise bei einer Slave-Einheit mit nur einer Verarbeitungseinheit mithilfe einer Doppelringstruktur und einer aktivierbarer Kopplungseinrichtung Rekonfigurationsmaßnahmen im Kommunikationssystem vorzunehmen, um bei Streckenfehler die Funktionsfähigkeit des Kommunikationssystems zu gewährleisten, wobei das Verhalten der Slave-Einheiten bezogen auf die Telegrammverarbeitung im Redundanzfall sich nicht von der im Normalbetrieb unterscheidet.

Die erfindungsgemäße Vorgehensweise ermöglicht es neben dem in den Figuren 1B und 1C gezeigten Streckendoppelfehler, bei dem die beiden Kommunikationspfade zum benachbarten Teilnehmer unterbrochen sind, auch Streckeneinfachfehler, bei dem nur ein Kommunikationspfad unterbrochen ist, zu erkennen und durch entsprechendes Rekonfigurieren der an die Fehlerstelle angrenzenden Teilnehmer die Funktionsfähigkeit des Kommunikationssystems aufrecht zu erhalten.

In den Slave-Einheiten 3 ist auch immer nur eine Verarbeitungseinheit 35 vorgesehen, so dass im Vergleich zu Slave-Einheiten mit zwei Verarbeitungseinheit keine Entscheidung getroffen werden muss, welche Verarbeitungseinheit für die Telegrammverarbeitung zuständig ist.

Um eine hohe Fehlertoleranz des Kommunikationssystems bei niedrigem Hardware-Aufwand insbesondere auch in der Master-Einheit 1 zu erreichen, wird die Verarbeitung der gegenläufig auf dem ersten Kommunikationspfad 21 und dem zweiten Kommunikationspfad 22 umlaufenden Telegramme so ausgeführt, dass sich die Verarbeitung beim störungsfreien Normalbetrieb von der beim Fehlerbetrieb, bei dem die Funktionsfähigkeit des Kommunikationssystems bei Streckenfehlern durch Rekonfiguration von einzelnen Slave-Einheiten aufrecht erhalten wird, nicht wesentlich unterscheidet. Die Slave-Einheit kann in der erfindungsgemäßen Weise ausgelegt sein. Es besteht jedoch auch die Möglichkeit Slave-Einheiten mit einem anderen Schaltaufbau, der sich im Rahmen eines Master-Slave-Systems mit einer Doppelringstruktur verwenden lässt, einzusetzen.

Weiterhin besteht erfindungsgemäß die Möglichkeit zur Steuerung der fehlertoleranten Doppelringstruktur eine Master-Slave-Einheit 1 mit nur einer Sendeeinheit TX11 und einer Empfangseinheit RX12 zu nutzen, wie sie auch beim Betrieb einer Einfachringstruktur eingesetzt wird. Dies wird durch Zwischenschaltung der erfindungsgemäßen Schnittstelleneinheit 4 erreicht, deren erste Schalteinheit 41 ausgelegt ist, ein über den Eingang 411 von der Sendeeinheit TX11 der Master-Einheit 1 empfangenes Telegramm gegenläufig über den ersten Ausgang 412 und den zweiten Ausgang 413 auf den ersten Kommunikationspfad 21 bzw. den zweiten Kommunikationspfad 22 auszugeben. Die zweite Schalteinheit 42 der Schnittstelleneinheit 4 ist wiederum so ausgelegt, dass die über den ersten Eingang 421 vom ersten Kommunikationspfad 21 und über den zweiten Eingang 422 vom zweiten Kommunikationspfad 22 empfangenen gegenläufig umlaufenden Telegramme über den Ausgang 423 an die Empfangseinheit RX12 der Master-Einheit 1 weitergeleitet werden.

Um eine hohe Fehlertoleranz zu erreichen, wird erfindungsgemäß ein identisches Telegramm sowohl auf dem ersten Kommunikationspfad 21 und dem zweiten Kommunikationspfad 22 ausgegeben. Gemäß einer Ausführungsform erfolgt dies, indem die Sendesteuereinheit 16 der Master-Einheit 1 über die Sendeeinheit TX11 zwei Telegramme mit einem identischen Datenfeld, das für jeden angeschlossene Slave-Einheit einen zugeordneten Datenbereich aufweist, und mit einem unterschiedlichen Adressenfeld an die erste Schalteinheit 41 der Schnittstelleneinheit sendet. Die erste Schalteinheit 41 der Schnittstelleneinheit 4 ist dann so ausgelegt, dass auf der Grundlage des Inhalts des Adressenfeldes das eine Telegramm auf dem ersten Kommunikationspfad 21 und das andere Telegramm auf dem zweiten Kommunikationspfad 22 ausgegeben wird. Das Adressenfeld kann dabei im einfachsten Fall ein 1-Bit-Feld sein, wobei die beiden Kommunikationspfade 21, 22 durch "0" bzw. "1" gekennzeichnet sind.

Die Verarbeitungseinheiten 35 der Slave-Einheiten 3 verarbeiten dann beim Durchlauf des Telegramms den der jeweiligen Slave-Einheit zugeordneten Datenbereich, wobei die Verarbeitungseinheit 35 in der vorher beschriebenen erfindungsgemäßen Weise sowohl im Normal- als auch im Fehlerbetrieb immer nur den zugeordneten Datenbereich in einem der beiden gegenläufig umlaufenden identischen Telegramm verarbeitet.

Die zweite Schalteinheit 42 der Schnittstelleneinheit 4 ist dann so ausgelegt, dass die beiden auf dem ersten Kommunikationspfad und dem zweiten Kommunikationspfad 21 gegenläufig umlaufenden Telegramme an die Empfangseinheit RX12 der Master-Einheit 1 weitergeleitet werden. Hierzu weist die zweite Schalteinheit 42 der Schnittstelleneinheit 4 vorzugsweise einen FIFO-Mechanismus auf, in den die über die beiden Eingänge 421, 422 empfangenen Telegramme eingespeist werden. Aus dem FIFO-Mechanismus werden dann die beiden Telegramme über den Ausgang 423 der Schnittstelleneinheit 4 an die Empfangseinheit RX12 der Master-Einheit 1 weitergeleitet. Durch den Einsatz des FIFO-Mechanismus wird eine mögliche Kollision bei der Rückkopplung der Telegramme auf die Master-Einheit 1 verhindert. In der Master-Einheit 1 werden die beiden empfangenen Telegramme an die Empfangssteuereinheit 18 weitergeleitet und dort überlagert, um so ein einzelnes Telegramm herzustellen. Dies geschieht vorzugsweise dadurch, dass die Nutzdaten der beiden Telegramme bitweise verodert werden.

Alternativ besteht auch die Möglichkeit, die Schnittstelleneinheit 4 intelligent auszulegen. In diesem Fall wird ein von der Sendesteuereinheit 16 über die Sendeeinheit TX11 an die Schnittstelleneinheit 4 angelegtes Telegramm in der ersten Schalteinheit 41 verdoppelt und dann das eine Telegramm auf dem ersten Kommunikationspfad 21 und das andere Informationssignal auf dem zweiten Kommunikationspfad 22 ausgegeben. Die Verarbeitungseinheit 35 in den Slave-Einheiten 3 verarbeitet dann den zugeordneten Datenbereich in einem der beiden durchlaufenden Telegramme. Die beiden Telegramme werden dann über den ersten und den zweiten Eingang 421, 422 der zweiten Schalteinheit 42 der Schnittstelleneinheit 4 empfangen und überlagert. Dies geschieht wiederum vorzugsweise, indem die Nutzdaten der beiden Telegramme bitweise verodert werden. Das sich dann ergebende Telegramm wird von der zweiten Schalteinheit 42 über den Ausgang 423 an die Empfangseinheit RX12 der Master-Einheit 1 weitergeleitet, die das Telegramm wiederum an die Empfangssteuereinheit 18 zum Auswerten anlegt.

Um Störungen im Kommunikationssystem, insbesondere auch bei einer Rekonfiguration des Kommunikationssystems durch Umschalten einzelner Slave-Einheiten auf den Fehlerbetrieb nach Auftreten eines Streckenfehlers bzw. eines Totalausfalls einer Slave-Einheit, festzustellen, weisen die umlaufenden Telegramme zusätzlich ein Zählerfeld auf, dessen Wert ausgewertet, bevorzugt aufaddiert wird, um den Betriebszustand des Kommunikationssystems zu ermitteln. Die beiden umlaufenden identischen Telegramme, die entweder, wie vorstehend erläutert, von der Sendesteuereinheit 16 der Master-Einheit 1 erzeugt und mit einem Adressenfeld versehen werden, auf dessen Grundlage die erste Schalteinheit 41 der Schnittstelleneinheit 4 das eine Telegramm dann auf den ersten Kommunikationspfad 21 und das andere Telegramm auf den zweiten Kommunikationspfad 22 ausgibt, oder die von der ersten Schalteinheit 41 der Schnittstelleneinheit 4, durch Duplizieren eines von der Master-Einheit empfangenen Telegramms erzeugt und zum getrennten gegenläufigen Senden auf den ersten Kommunikationspfad 21 und den zweiten Kommunikationspfad 22 ausgegeben werden, weisen im Zählerfeld einen vorgegebenen Wert auf. Die Verarbeitungseinheit 35 der Slave-Einheiten 3 sind weiterhin jeweils so ausgelegt, dass beim Durchlauf des Telegramms der Wert des Zählerfeldes um einen vorgegebenen Wert verändert wird.

Dann, wenn die zweite Schalteinheit 42 der Schnittstelleneinheit 4 die beiden empfangenen Telegramme nur zur Master-Einheit 1 durchleitet, wird in der Empfangssteuereinheit 18 der Master-Einheit 1 jeweils der Wert des Zählerfeldes der beiden Telegramme ausgewertet. Durch einfaches Aufaddieren der beiden Werte kann festgestellt werden, ob alle angeschlossenen Slave-Einheiten aktiv sind. Alternativ besteht auch die Möglichkeit bei einer intelligenten Auslegung der Schnittstelleneinheit 4, dann wenn die empfangenen Telegramme bereits in der zweiten Schalteinheit 42 verodert werden, die Zusammenführung der Zählerfelder der beiden Telegramme in der zweiten Schalteinheit 42 der Schnittstelleneinheit 4 vorzugsweise durch Aufaddieren vorzunehmen. Der aufaddierte Wert wird dann zusammen mit dem veroderten Telegramm zur Master-Einheit 1 zur Auswertung übertragen.

Bevorzugt wird dabei das Zählerfeld der beiden Telegramme auf den Wert 0 als Ausgangswert gesetzt. Jede Verarbeitungseinheit 35 erhöht dann den Wert beim Durchlauf des Telegramms durch die Slave-Einheit 3 um den vorgebenen Wert z. B. den Wert 1. Da durch die erfindungsgemäße Auslegung der Slave-Einheiten sowohl im Normalbetrieb als auch im Fehlerbetrieb immer nur ein Telegramm durch die Verarbeitungseinheit 35 verarbeitet wird, kann der addierte Wert der Zählerfelder die Anzahl der aktiven Slave-Einheiten angeben. Es kann somit ermittelt werden, ob alle angeschlossenen Slave-Einheiten aktiv sind oder ob ein Totalausfall einer Slave-Einheit z.B. durch zweifachen Streckendoppelfehler, wie in Fig. 1C gezeigt, aufgetreten ist. Außerdem kann durch Vergleich der Werte in den beiden Zählerfeldern unter Zugrundelegen der bekannten Anzahl der angeschlossenen Slave-Einheiten die genaue Position des Streckenfehlers, z.B. das Auftreten zwischen der Slave-Einheit M und der Slave-Einheit M+1 in Fig. 1B festgestellt werden.

Ein fehlertoleranter Betrieb des Kommunikationssystems insbesondere bei Rekonfiguration des Kommunikationssystems durch Verändern des Signallaufes in den Slave-Einheiten 3 bei Auftreten eines Streckenfehlers wird weiterhin dadurch erreicht, dass die beiden identischen, gegenläufigen auf dem ersten Kommunikationspfad 21 und dem zweiten Kommunikationspfad 22 umlaufenden Telegramme so ausgelegt sind, dass im Datenfeld jeder angeschlossenen Slave-Einheit 3 ein eigener Datenbereich zugeordnet sein kann. Die Verarbeitungseinheit 35 jeder Slave-Einheit 3 führt mit dem durchlaufenden Telegramm einen Datenaustausch in dem zugeordneten Datenbereich durch. In der zweiten Schalteinheit 42 der Schnittstelleneinheit 4 oder in der Empfangssteuereinheit 18 der Master-Einheit 1 werden dann die Datenfelder der beiden über den ersten und den zweiten Kommunikationspfad rückgekoppelten Telegramme überlagert, so dass sich ein gemeinsames Telegramm ergibt. Dieses überlagerte Telegramm ist immer gleich, unbesehen davon, ob das Kommunikationssystem sich im Normalbetrieb oder im Fehlerbetrieb nach Auftreten eines Streckenfehlers befindet, solange noch alle Slave-Einheiten aktiv sind.

Beim Lesebetrieb, dann, wenn die Slave-Einheiten 3 Daten zur Master-Einheit 1 übertragen, wird das gesamte Datenfeld der beiden gegenläufig umlaufenden Telegramme auf den Wert 0 als Ausgangswert gesetzt. Die Verarbeitungseinheiten 35 der Slave-Einheiten 3 schreiben in den zugeordneten Datenbereich die gewünschten Daten ein. Die Empfangssteuereinheit 18 der Master-Einheit 1 oder die zweite Schalteinheit 42 der Schnittstelleneinheit 4 verodert anschließend die Datenfelder der beiden empfangenen Telegramme, um ein gemeinsames Telegramm zu bilden. Unbesehen davon, ob das Kommunikationssystem sich im Normalbetrieb oder im Rekonfigurationsbetrieb befindet, enthält das veroderte Telegramm alle von der Master-Einheit 1 angeforderten Daten der angeschlossenen Slave-Einheiten 3. Beim Schreibbetrieb dagegen, dann, wenn die Master-Einheit 1 Steuerbefehle auf die Slave-Einheiten 3 übertragen möchte, übergibt die Sendesteuereinheit 16 der Master-Einheit 1 zwei identische Telegramme mit einem Datenfeld, das die zu den Slave-Einheiten zu übertragenden Daten enthält, zum gegenläufigen Senden auf den beiden Kommunikationspfaden. Alternativ wird das Telegramm bei einer intelligenten Schnittstelleneinheit auch erst in der ersten Schalteinheit 41 dupliziert. Die Verarbeitungseinheiten 35 der Slave-Einheiten 3 entnehmen gleichgültig, ob sie sich im Normalbetrieb oder im Rekonfigurationsbetrieb befindet, die zugeordneten Daten aus dem Telegramm. Ein Verodern der Datenfelder der beiden rückgekoppelten Telegramme ist prinzipiell nicht erforderlich. Ein solcher Veroder-Vorgang führt aber zu einem gemeinsamen Telegramm mit einem Datenfeld, das dem Datenfeld des gesendeten Telegramms entspricht, so dass sich hierdurch eine zusätzliche Kontrollmöglichkeit für einen erfolgreichen Schreibbetrieb ergibt.

Mit der erfindungsgemäßen Auslegung des Master-Slave-Kommunikationssystems mit zwischengeschalteter Schnittstelleneinheit besteht bei beliebiger Ausgestaltung der einzelnen Slave-Einheiten, insbesondere jedoch dann, wenn die Slave-Einheiten auf die erfindungsgemäße Weise aufgebaut und betrieben werden, für die Master-Einheit auf einfache Weise die Möglichkeit, die Störfreiheit im Kommunikationssystem, insbesondere bei einer Rekonfiguration des Signalverlaufes in der Doppelringstruktur nach Auftreten eines Streckenfehlers festzustellen. Weiterhin ist im Kommunikationssystem auch im redundanten Fall, also dann, wenn im Kommunikationssystem einzelne Slave-Einheiten auf Fehlerbetrieb umgeschaltet haben, ein zuverlässiger Lesebetrieb durch Überlagern der Datenfelder der beiden rückgekoppelten Telegramme gewährleistet. Der Einsatz der Schnittstelleneinheit ermöglicht dabei den Einsatz herkömmlicher Master-Einheiten mit nur einer Sende- bzw. Empfangseinheit, wie sie auch in einer Einfachringstruktur genutzt werden.

## Patentansprüche

1. Schnittstelleneinheit (4) für ein Kommunikationssystem mit einer Master-Slave-Struktur zum Verbinden einer Master-Einheit (1) seriell mit einer Mehrzahl von Slave-Einheiten (3) über eine aus einem ersten Kommunikationspfad (21) und einem zweiten Kommunikationspfad (22) gebildete gegenläufig arbeitende Doppelringstruktur (2), mit einer ersten Schalteinheit (41), deren Eingang (411) mit einer Sendeeinheit (11) der Master-Einheit (1), deren erster Ausgang (412) mit dem ersten Kommunikationspfad (21) und deren zweiter Ausgang (423) mit dem zweiten Kommunikationspfad (22) verbunden ist und die ausgelegt ist, ein von der Sendeeinheit (11) der Master-Einheit (1) empfangenes Informationssignal zum getrennten gegenläufigen Senden auf den ersten Kommunikationspfad (21) und den zweiten Kommunikationspfad (22) auszugeben, und
mit einer zweiten Schalteinheit (42), deren erster Eingang (421) mit dem ersten Kommunikationspfad (21), deren zweiter Eingang (422) mit dem zweiten Kommunikationspfad (22) und deren Ausgang (423) mit einer Empfangseinheit (12) der Master-Einheit (1) verbunden ist und die ausgelegt ist, die beiden auf dem ersten Kommunikationspfad (21) und dem zweiten Kommunikationspfad (22) gegenläufig umlaufenden Informationssignale an die Empfangseinheit (12) der Master-Einheit (1) weiterzuleiten.

2. Schnittstelleneinheit nach Anspruch 1,
wobei die erste Schalteinheit (41) ausgelegt ist, ein von der Sendeeinheit (11) der Master-Einheit (1) empfangenes Informationssignal zum getrennten gegenläufigen Senden auf dem ersten Kommunikationspfad (21) und dem zweiten Kommunikationspfad (22) zu duplizieren.

3. Schnittstelleneinheit nach Anspruch 1,
wobei die erste Schalteinheit (41) ausgelegt ist, eine Adresseninformation im von der Sendeeinheit (11) der Master-Einheit (1) empfangenen Informationssignal zum Senden des Informationssignals auf dem ersten Kommunikationspfad (21) oder dem zweiten Kommunikationspfad (22) auszuwerten.

4. Schnittstelleneinheit nach einem der Ansprüche 1 bis 3, wobei die zweite Schalteinheit (42) ausgelegt ist, die beiden auf dem ersten Kommunikationspfad (21) und dem zweiten Kommunikationspfad (22) gegenläufig umlaufende Informationssignale auszuwerten.

5. Schnittstelleneinheit nach einem der Ansprüche 1 bis 3, wobei die zweite Schalteinheit (42) ausgelegt ist, die beiden auf dem ersten Kommunikationspfad (21) und dem zweiten Kommunikationspfad (22) gegenläufig umlaufenden Informationssignale nacheinander an die Empfangseinheit (12) der Master-Einheit (1) weiterzuleiten.

6. Schnittstelleneinheit nach Anspruch 5, wobei die zweite Schalteinheit (42) einen FIFO-Mechanismus aufweist.

7. Kommunikationssystem mit einer Master-Slave-Struktur, das eine Master-Einheit (1), eine Mehrzahl von Slave-Einheiten (3), eine aus einem ersten Kommunikationspfad (21) und einem zweiten Kommunikationspfad (22) gebildete gegenläufig arbeitende Doppelringstruktur (2) und eine Schnittstelleneinheit (4) gemäß einem der Ansprüche 1 bis 6 zum Verbinden der Master-Einheit seriell mit der Mehrzahl von Slave-Einheiten (3) über die Doppelringstruktur (2) aufweist,
wobei die Master-Einheit (1) eine Sendeeinheit (11) zum Senden von Informationssignalen, eine Empfangseinheit (12) zum Empfangen von Informationssignalen, eine mit der Sendeeinheit verbundene Sendesteuereinheit (16) und eine mit der Empfangseinheit verbundene Empfangssteuereinheit (18) aufweist,
wobei die Schnittstelleneinheit (4) die erste Schalteinheit (41), deren Eingang (411) mit der Sendeeinheit (11) der Master-Einheit (1), deren erster Ausgang (421) mit
dem ersten Kommunikationspfad (21) und deren zweiter Ausgang (412) mit dem zweiten Kommunikationspfad (22) verbunden ist, und die zweite Schalteinheit (42), deren erster Eingang (421) mit dem ersten Kommunikationspfad (21), deren zweiter Eingang (422) mit dem zweiten Kommunikationspfad (22) und deren Ausgang (423) mit der Empfangseinheit (12) der Master-Einheit (1) verbunden ist, aufweist,
wobei jede Slave-Einheit (3) eine erste mit dem ersten Kommunikationspfad verbundene Empfangseinheit (31) zum Empfang von Informationssignalen auf dem ersten Kommunikationspfad (21), eine erste mit dem ersten Kommunikationspfad (21) verbundene Sendeeinheit (32) zum Senden von Informationssignalen auf dem ersten Kommunikationspfad, eine zweite mit dem zweiten Kommunikationspfad (22) verbundene Empfangseinheit (33) zum Empfang von Informationssignalen auf dem zweiten Kommunikationspfad (22) und eine zweite mit dem zweiten Kommunikationspfad verbundene Sendeeinheit (34) zum Senden von Informationssignalen auf dem zweiten Kommunikationspfad (22), eine einen Eingang und einen Ausgang aufweisende Verarbeitungseinheit (35) zum Verarbeiten von Informationssignalen und eine aktivierbare Kopplungseinrichtung (37) aufweist,
wobei die Sendesteuereinheit (16) der Master-Einheit (1) ausgelegt ist, über die Sendeeinheit (11) zwei Informationssignale mit einem identischen Datenfeld, das für jede angeschlossene Slave-Einheit einen zugeordneten Datenbereich aufweisen kann, und mit einem unterschiedlichen Adressenfeld an die erste Schalteinheit (41) der Schnittstelleneinheit (4) zu senden,
wobei die erste Schalteinheit (41) der Schnittstelleneinheit (4) ausgelegt ist, auf der Grundlage des Inhalts des Adressenfeldes das eine Informationssignal auf dem ersten Kommunikationspfad (21) und das andere Informationssignal auf dem zweiten Kommunikationspfad (22) auszugeben,
wobei die aktivierbare Kopplungseinrichtung (32) jeder Slave-Einheit ausgelegt ist, im Normalbetrieb den Eingang der Verarbeitungseinheit (35) mit der ersten Empfangseinheit (31), den Ausgang der Verarbeitungseinheit (35) mit der ersten Sendeeinheit (32) und die zweite Empfangseinheit (33) mit der zweiten Sendeeinheit (34) zu verbinden, im Fehlerbetrieb der ersten Sendeeinheit (32) und/oder der zweiten Empfangseinheit (33) den Eingang der Verarbeitungseinheit (35) mit der ersten Empfangseinheit (31) und den Ausgang der Verarbeitungseinheit mit der zweiten Sendeeinheit (34) zu verbinden, und im Fehlerbetrieb der ersten Empfangseinheit (31) und/oder der zweiten Sendeeinheit (34) den Eingang der Verarbeitungseinheit (35) mit der zweiten Empfangseinheit (33) und den Ausgang der Verarbeitungseinheit (35) mit der ersten Sendeeinheit (32) zu verbinden, wobei die Verarbeitungseinheit (35) jeder Slave-Einheit (3) ausgelegt ist, beim Verarbeiten des durchlaufenden Informationssignals den zugeordneten Datenbereich zu verarbeiten,
wobei die zweite Schalteinheit (42) der Schnittstelleneinheit (4) ausgelegt ist, die beiden auf dem ersten Kommunikationspfad (21) und dem zweiten Kommunikationspfad (22) gegenläufig umlaufenden Informationssignale nacheinander an die Empfangseinheit (12) der Master-Einheit (1) weiterzuleiten, und
wobei die Empfangssteuereinheit (18) der Master-Einheit (1) ausgelegt ist, die Datenfelder der beiden von der Empfangseinheit empfangenen Informationssignale zu überlagern.

8. Kommunikationssystem nach Anspruch 7,
wobei die Sendesteuereinheit (16) der Master-Einheit (1) ausgelegt ist, die zwei Informationssignale zusätzlich mit einem auf einen vorgebenden Wert gesetzten Zählerfeld zu versehen,
wobei die Verarbeitungseinheit (35) der Slave-Einheit (3) ausgelegt ist, beim Durchlauf des Informationssignals den Wert des Zählerfeldes um einen vorgebenden Wert zu verändern, und
wobei die Empfangssteuereinheit (18) der Master-Einheit (1) ausgelegt ist, jeweils den Wert der Zählerfelder der beiden von der ersten Empfangseinheit empfangenen Informationssignale auszuwerten.

9. Kommunikationssystem nach Anspruch 8,
wobei die Empfangssteuereinheit (18) der Master-Einheit ausgelegt ist, den Wert der Zählerfelder empfangenen Informationssignale aufzuaddieren.

10. Kommunikationssystem mit einer Master-Slave-Struktur, das eine Master-Einheit (1), eine Mehrzahl von Slave-Einheiten (3), eine aus einem ersten Kommunikationspfad (21) und einem zweiten Kommunikationspfad (22) gebildete gegenläufig arbeitende Doppelringstruktur (2) und eine Schnittstelleneinheit (4) gemäß einem der Ansprüche 1 bis 6 zum Verbinden der Master-Einheit (1) seriell mit der Mehrzahl von Slave-Einheiten (3) über die Doppelringstruktur (2) aufweist,
wobei die Master-Einheit (1) eine Sendeeinheit (11) zum Senden von Informationssignalen, eine Empfangseinheit (12) zum Empfangen von Informationssignalen, eine mit der Sendeeinheit verbundene Sendesteuereinheit (16) und eine mit der Empfangseinheit verbundene Empfangssteuereinheit (18) aufweist,
wobei die Schnittstelleneinheit (4) die ersten Schalteinheit (41), deren Eingang (411) mit der Sendeeinheit (11) der Master-Einheit (1), deren erster Ausgang (412) mit dem ersten Kommunikationspfad (21) und deren zweiter Ausgang (422) mit dem zweiten Kommunikationspfad (22) verbunden ist, und die zweiten Schalteinheit (42), deren erster Eingang (421) mit dem ersten Kommunikationspfad (21), deren zweiter Eingang (422) mit dem zweiten Kommunikationspfad (22) und deren Ausgang (423) mit der Empfangseinheit (12) der Master-Einheit (1) verbunden ist, aufweist,
wobei jede Slave-Einheit (3) eine erste mit dem ersten Kommunikationspfad verbundene Empfangseinheit (31) zum Empfang von Informationssignalen auf dem ersten Kommunikationspfad (21), eine erste mit dem ersten Kommunikationspfad (21) verbundene Sendeeinheit (32) zum Senden von Informationssignalen auf dem ersten Kommunikationspfad, eine zweite mit dem zweiten Kommunikationspfad (22) verbundene Empfangseinheit (33) zum Empfang von Informationssignalen auf dem zweiten Kommunikationspfad und eine zweite mit dem zweiten Kommunikationspfad verbundene Sendeeinheit (34) zum Senden von Informationssignalen auf dem zweiten Kommunikationspfad, eine einen Eingang und einen Ausgang aufweisende Verarbeitungseinheit (35) zum Verarbeiten von Informationssignalen und eine aktivierbare Kopplungseinrichtung (37) aufweist,
wobei die Sendesteuereinheit (16) der Master-Einheit (1) ausgelegt ist, über die Sendeeinheit (11) ein Informationssignal mit einem Datenfeld, das für jede angeschlossene Slave-Einheit einen zugeordneten Datenbereich aufweist, an die erste Schalteinheit (41) der Schnittstelleneinheit (4) zu senden,
wobei die erste Schalteinheit (41) der Schnittstelleneinheit (4) ausgelegt ist, das von der Sendeeinheit (11) der Master-Einheit (1) empfangene Informationssignal zu duplizieren und das eine Informationssignal auf dem ersten Kommunikationspfad (21) und das andere Informationssignal auf dem zweiten Kommunikationspfad (22) auszugeben,
wobei die aktivierbare Kopplungseinrichtung (37) jeder Slave-Einheit (3) ausgelegt ist, um im Normalbetrieb den Eingang der Verarbeitungseinheit (35) mit der ersten Empfangseinheit (31), den Ausgang der Verarbeitungseinheit (35) mit der ersten Sendeeinheit (32) und die zweite Empfangseinheit (33) mit der zweiten Sendeeinheit (34) zu verbinden, im Fehlerbetrieb der ersten Sendeeinheit (32) und/oder der zweiten Empfangseinheit (33) den Eingang der Verarbeitungseinheit (35) mit der ersten Empfangseinheit (31) und den Ausgang der Verarbeitungseinheit mit der zweiten Sendeeinheit (34) zu verbinden, und im Fehlerbetrieb der ersten Empfangseinheit (31) und/oder der zweiten Sendeeinheit (34) den Eingang der Verarbeitungseinheit (35) mit der zweiten Empfangseinheit (33) und den Ausgang der Verarbeitungseinheit (35) mit der ersten Sendeeinheit (32) zu verbinden, wobei die Verarbeitungseinheit (35) jeder Slave-Einheit (3) ausgelegt ist, beim Verarbeiten des durchlaufenden Informationssignals den zugeordneten Datenbereich zu verarbeiten,
wobei die zweite Schalteinheit (42) der Schnittstelleneinheit (4) ausgelegt ist, die Datenfelder der beiden auf dem ersten Kommunikationspfad (21) und dem zweiten Kommunikationspfad (22) gegenläufig umlaufenden Informationssignale zu überlagern und an die Empfangseinheit (12) der Master-Einheit (1) weiterzuleiten, und wobei die Empfangssteuereinheit (18) der Master-Einheit (1) ausgelegt ist, das von der Empfangseinheit empfangene Informationssignal auszuwerten.

11. Kommunikationssystem nach Anspruch 9,
wobei die Sendesteuereinheit (16) der Master-Einheit (1) ausgelegt ist, das Informationssignal zusätzlich mit einem auf einen vorgebenden Wert gesetzten Zählerfeld zu versehen,
wobei die Verarbeitungseinheit (35) der Slave-Einheit (3) ausgelegt ist, beim Durchlauf des Informationssignals den Wert des Zählerfeldes um einen vorgebenden Wert zu verändern,
wobei die zweite Schalteinheit (42) der Schnittstelleneinheit (4) ausgelegt ist, den Wert der Zählerfelder empfangenen Informationssignale beim Überlagern der Informationssignale aufzuaddieren, und
wobei die Empfangssteuereinheit (18) der Master-Einheit (1) ausgelegt ist, den Wert des Zählerfeldes des von der Empfangseinheit empfangenen Informationssignals auszuwerten.

12. Kommunikationssystem nach einem der Ansprüche 7 bis 11, wobei die zweite Schalteinheit (42) einen FIFO-Mechanismus aufweist.

13. Kommunikationssystem nach einem der Ansprüche 7 bis 12, wobei die aktivierbare Kopplungseinrichtung (37) der Slave-Einheit (3) einen ersten Multiplexer (38), dessen erster Eingang mit der ersten Empfangseinheit (31), dessen zweiter Eingang mit der zweiten Empfangseinheit (33) und dessen Ausgang mit dem Eingang der Verarbeitungseinheit (35) verbunden ist und einen zweiten Multiplexer (39), dessen erster Eingang mit der zweiten Empfangseinheit (33), dessen zweiter Eingang mit dem Ausgang der Verarbeitungseinheit (35) und dessen Ausgang mit der zweiten Sendeeinheit (34) verbunden ist, aufweist, wobei der erste Multiplexer (38) ausgelegt ist, um im Normalbetrieb seinen ersten Eingang auf seinen Ausgang und im Fehlerbetrieb der ersten Empfangseinheit (31) und/oder der zweiten Sendeeinheit (34) seinen zweiten Eingang auf seinen Ausgang aufzuschalten, und wobei der zweite Multiplexer (39) ausgelegt ist, um im Normalbetrieb seinen ersten Eingang auf seinen Ausgang und im Fehlerbetrieb der ersten Sendeeinheit (32) und/oder der zweiten Empfangseinheit (33) seinen zweiten Eingang auf seinen Ausgang aufzuschalten.

14. Kommunikationssystem nach einem der Ansprüche 7 bis 13, wobei die erste Sendeeinheit (32) und die zweite Sendeeinheit (34) und/oder die erste Empfangseinheit (31) und die zweite Empfangseinheit (33) der Slave-Einheit (3) ausgelegt sind, einen Streckenfehler im angeschlossenen Kommunikationspfad festzustellen und einen entsprechenden Fehlerbetrieb anzustoßen.

## Claims

1. An interface unit (4) for a communication system comprising a master-slave structure for serially connecting a master unit (1) to a plurality of slave units (3) via a double ring structure (2) formed of a first communication path (21) and a second communication path (22) and operating in a contra-sense manner,
comprising a first switching unit (41), the input (411) of which is connected to a transmitting unit (11) of the master unit (1), the first output (412) of which is connected to the first communication path (21) and the second output of which (423) is connected to the second communication path (22) and which is configured to output an information signal received by the transmitting unit (11) of the master unit (1) for separate contra-sense transmitting to the first communication path (21) and to the second communication path (22), and comprising a second switching unit (42), the first input (421) of which is connected to the first communication path (21), the second input (422) of which is connected to the second communication path (22) and the output (423) of which is connected to a receiving unit (12) of the master unit (1) and which is configured to forward the two information signals circulating on the first communication path (21) and on the second communication path (22) in contra-sense to the receiving unit (12) of the master unit (1).

2. The interface unit of claim 1,
the first switching unit (41) being configured to duplicate an information signal received by the transmitting unit (11) of the master unit (1) for separate contra-sense transmitting on the first communication path (21) and on the second communication path (22).

3. The interface unit of claim 1,
the first switching unit (41) being configured to evaluate an address information in the information signal received by the transmitting unit (11) of the master unit (1) for transmitting the information signal on the first communication path (21) or on the second communication path (22).

4. The interface unit of any one of claims 1 to 3, the second switching unit (42) being configured to evaluate the two information signals circulating in contra-sense on the first communication path (31) and on the second communication path (22).

5. The interface unit of any one of claims 1 to 3, the second switching unit (42) being configured to successively forward the two information signals circulating in contra-sense on the first communication path (21) and on the second communication path (22) to the receiving unit (12) of the master unit (1).

6. The interface unit of claim 5, the second switching unit (42) comprising a FIFO mechanism.

7. Communication system having a master-slave structure, comprising a master unit (1), a plurality of slave units (3), a double ring structure (2) formed by a first communication path (21) and a second communication path (22) operating in contra-sense, and an interface unit (4) according to any one of claims 1 to 6 for serially connecting the master unit to a plurality of slave units (3) via the double ring structure (2),
the master unit (1) comprising a transmitting unit (11) for transmitting information signals, a receiving unit (12) for receiving information signals, a transmission control unit (16) connected to the transmitting unit and a receiving control unit (18) connected to the receiving unit,
the interface unit (4) comprising the first switching unit (41), the input (411) of which is connected to the transmitting unit (11) of the master unit (1), the first output (421) of which is connected to the first communication path (21) and the second output (412) of which is connected to the second communication path (22), and the second switching unit (42), the first input (421) of which is connected to the first communication path (21), the second input (422) of which is connected to the second communication path (22) and the output (423) of which is connected to the receiving unit (12) of the master unit (1),
each slave unit (3) comprising a first receiving unit (31) connected to the first communication path for receiving information signals on the first communication path (21), a first transmitting unit (32) connected to the first communication path (21) for transmitting information signals on the first communication path, a second receiving unit (33) connected to the second communication path (22) for receiving information signals on the second communication path (22) and a second transmitting unit (34) connected to the second communication path for transmitting information signals on the second communication path (22), a processing unit (35) comprising an input and an output for processing information signals and an actuable coupling unit (37),
the transmission control unit (16) of the master unit (1) being configured to transmit two information signals having an identical data field, which may be provided with an associated data area for each connected slave unit, and a different address field to the first switching unit (41) of the interface unit (4) via the transmitting unit (11),
the first switching unit (41) of the interface unit (4) being configured to output the one information signal to the first communication path (21) and the other information signal to the second communication path (22) on the basis of the contents of the address field,
the actuable coupling unit (32) of each slave unit being configured to connect the input of the processing unit (35) to the first receiving unit (31) in normal operating mode, to connect the output of the processing unit (35) to the first transmitting unit (32) and the second receiving unit (33) to the second transmitting unit (34), to connect the input of the processing unit (35) to the first receiving unit (31) and the output of the processing unit to the second transmitting unit (34) in a failure mode of the first transmitting unit (32) and/or of the second receiving unit (33), and to connect the input of the processing unit (35) to the second receiving unit (33) and the output of the processing unit (35) to the first transmitting unit (32) in a failure mode of the first receiving unit (31) and/or the second transmitting unit (34),
the processing unit (35) of each slave unit (3) being configured to process the associated data area while processing the information signal passing through, the second switching unit (42) of the interface unit (4) being configured to successively forward the two information signals circulating in contra-sense on the first communication path (21) and on the second communication path (22) to the receiving unit (12) of the master unit (1), and
the receiving control unit (18) of the master unit (1) being configured to superimpose the data fields of the two information signals received by the receiving unit.

8. The communication system of claim 7,
the transmission control unit (16) of the master unit (1) being configured to additionally provide the two information signals with a counter field set to a predetermined value,
the processing unit (35) of the slave unit (3) being configured to modify the value of the counter field by a predetermined value while the information signal is passing through, and
the receiving control unit (18) of the master unit (1) being configured to respectively evaluate the value of the counter field of the two information signals received by the first receiving unit.

9. The communication system of claim 8,
the receiving control unit (18) of the master unit being configured to add up the value of the counter fields of the received information signals.

10. A communication system having a master-slave structure, comprising a master unit (1), a plurality of slave units (3), a double ring structure (2) formed by a first communication path (21) and a second communication path (22) operating in contra-sense, and an interface unit (4) according to any one of claims 1 to 6 for serially connecting the master unit (1) to a plurality of slave units (3) via the double-ring structure (2),
the master unit (1) comprising a transmitting unit (11) for transmitting information signals, a receiving unit (12) for receiving information signals, a transmission control unit (16) connected to the transmitting unit and a receiving control unit (18) connected to the receiving unit,
the interface unit (4) comprising the first switching unit (41), the input (411) of which is connected to the transmitting unit (11) of the master unit (1), the first output (412) of which is connected to the first communication path (21) and the second output (422) of which is connected to the second communication path (21), and the second switching unit (42), the first input (421) of which is connected to the first communication path (21), the second input (422) of which is connected to the second communication path (22) and the output (423) of which is connected to the receiving unit (12) of the master unit (1),
each slave unit (3) comprising a first receiving unit (31) connected to the first communication path for receiving information signals on the first communication path (21), a first transmitting unit (32) connected to the first communication path (21) for sending information signals on the first communication path, a second receiving unit (33) connected to the second communication path (22) for receiving information signals on the second communication path (22) and a second transmitting unit (34) connected to the second communication path for sending information signals on the second communication path, a processing unit (35) comprising an input and an output for processing information signals and an actuable coupling unit (37),
the transmission control unit (16) of the master unit (1) being configured to send an information signal having a data field, which provides an associated data area for each connected slave unit to the first switching unit (41) of the interface unit (4) via the transmitting unit (11),
the first switching unit (41) of the interface unit (4) being configured to duplicate the information signal received by the transmitting unit (11) of the master unit (1) and to output the one information signal to the first communication path (21) and the other information signal to the second communication path (22),
the actuable coupling unit (37) of each slave unit (3) being configured to connect the input of the processing unit (35) to the first receiving unit (31) in normal operating mode, to connect the output of the processing unit (35) to the first transmitting unit (32) and the second receiving unit (33) to the second transmitting unit (34), to connect the input of the processing unit (35) to the first receiving unit (31) and the output of the processing unit to the second transmitting unit (34) in a failure mode of the first transmitting unit (32) and/or of the second receiving unit (33), and to connect the input of the processing unit (35) to the second receiving unit (33) and the output of the processing unit (35) to the first transmitting unit (32) in a failure mode of the first receiving unit (31) and/or the second transmitting unit (34),
the processing unit (35) of each slave unit (3) being configured to process the associated data area while processing the information signal passing through, the second switching unit (42) of the interface unit (4) being configured to superimpose the data fields of the two information signals circulating in contra-sense on the first communication path (21) and on the second communication path (22) and to forward them to the receiving unit (12) of the master unit (1), and
the receiving control unit (18) of the master unit (1) being configured to evaluate the information signal received from the receiving unit.

11. The communication system of claim 9,
the transmission control unit (16) of the master unit (1) being configured to additionally provide the information signal with a counter field set to a predetermined value,
the processing unit (35) of the slave unit (3) being configured to modify the value of the counter field by a predetermined value while the information signal is passing through,
the second switching unit (42) of the interface unit (4) being configured to add up the value of the counter fields of the received information signals when the information signals are superimposed, and
the receiving control unit (18) of the master unit (1) being configured to respectively evaluate the value of the counter field of the information signal received by the receiving unit.

12. The communication system of any one of claims 7 to 11, the second switching unit (42) comprising a FIFO mechanism.

13. The communication system of any one of claims 7 to 12, the actuable coupling unit (37) of the slave unit (3) comprising a first multiplexer (38), the first input of which is connected to the first receiving unit (31), the second input of which is connected to the second receiving unit (33) and the output of which is connected to the input of the processing unit (35), and a second multiplexer (39), the first input of which is connected to the second receiving unit (33), the second input of which is connected to the output of the processing unit (35) and the output of which is connected to the second transmitting unit (34), the first multiplexer (38) being configured to switch its first input to its output in normal operation mode and to switch its second input to its output in a failure mode of the first receiving unit (31) and/or of the second transmitting unit (34), and the second multiplexer (39) being configured to switch its first input to its output in a normal operation mode and to switch its second input to its output in a failure mode of the first transmitting unit (32) and/or of the second receiving unit (33).

14. The communication system of any one of claims 7 to 13, the first transmitting unit (32) and the second transmitting unit (34) and/or the first receiving unit (31) and the second receiving unit (33) of the slave unit (3) being configured to determine a link fault in the connected communication path and to trigger a corresponding failure mode.

## Revendications

1. Unité d'interface (4) pour un système de communication qui présente
une structure maître-esclaves destinée à relier en série une unité maître (1) à plusieurs unités esclaves (3) par l'intermédiaire d'une structure (2) en deux anneaux qui travaillent en sens opposés et formée d'un premier parcours de communication (21) et d'un deuxième parcours de communication (22),
une première unité de commutation (41) dont l'entrée (411) est reliée à une unité d'émission (11) de l'unité maître (1), dont la première sortie (412) est reliée au premier parcours de communication (21) et dont la deuxième sortie (423) est reliée au deuxième parcours de communication (22), et qui est conçue pour délivrer un signal d'information reçu en provenance de l'unité d'émission (11) de l'unité maître (1) en l'envoyant en des sens opposés sur le premier parcours de communication (21) et sur le deuxième parcours de communication (22),
une deuxième unité de commutation (42) dont la première entrée (421) est reliée au premier parcours de communication (21), dont la deuxième entrée (422) est reliée au deuxième parcours de communication (22) et dont la sortie (423) est reliée à une unité de réception (12) de l'unité maître (1), et qui est conçue pour transmettre à l'unité de réception (12) de l'unité maître (1) les deux signaux d'information qui circulent en sens opposé sur le premier parcours de communication (21) et sur le deuxième parcours de communication (22).

2. Unité d'interface selon la revendication 1, dans laquelle la première unité de commutation (41) est conçue pour dupliquer un signal d'information reçu en provenance de l'unité d'émission (11) de l'unité maître (1) et pour l'envoyer séparément et en sens opposés sur le premier parcours de communication (21) et sur le deuxième parcours de communication (22).

3. Unité d'interface selon la revendication 1, dans laquelle la première unité de commutation (41) est conçue pour évaluer une information d'adresse du signal d'information reçu en provenance de l'unité d'émission (11) de l'unité maître (1) pour envoyer le signal d'information sur le premier parcours de communication (21) ou l'évaluer sur le deuxième parcours de communication (22).

4. Unité d'interface selon l'une des revendications 1 à 3, dans laquelle la deuxième unité de commutation (42) est conçue pour évaluer les deux signaux d'information qui circulent en sens opposés sur le premier parcours de communication (21) et sur le deuxième parcours de communication (22).

5. Unité d'interface selon l'une des revendications 1 à 3, dans laquelle la deuxième unité de commutation (42) est conçue pour transmettre successivement à l'unité de réception (12) de l'unité maître (1) les deux signaux d'information qui circulent en sens opposés sur le premier parcours de communication (21) et sur le deuxième parcours de communication (22).

6. Unité d'interface selon la revendication 5, dans laquelle la deuxième unité de commutation (42) présente un mécanisme FIFO.

7. Système de communication doté d'une structure maître-esclaves et qui présente
une unité maître (1),
plusieurs unités esclaves (3),
une structure (2) en deux anneaux qui travaillent en sens opposés, formée d'un premier parcours de communication (21) et d'un deuxième parcours de communication (22) et
une unité d'interface (4) selon l'une des revendications 1 à 6 qui relie l'unité maître en série avec les différentes unités esclaves (3) par la structure (2) en deux anneaux,
l'unité maître (1) présentant une unité d'émission (11) qui émet des signaux d'information, une unité de réception (12) qui reçoit les signaux d'information, une unité (16) de commande d'émission reliée à l'unité d'émission et une unité (18) de commande de réception reliée à l'unité de réception,
l'unité d'interface (4) présentant la première unité de commutation (41) dont l'entrée (411) est reliée à l'unité d'émission (11) de l'unité maître (1), dont la première sortie (421) est reliée au premier parcours de communication (21) et dont la deuxième sortie (412) est reliée au deuxième parcours de communication (22), et la deuxième unité de commutation (42) dont la première entrée (421) est reliée au premier parcours de communication (21), dont la deuxième entrée (422) est reliée au deuxième parcours de communication (22) et dont la sortie (423) est reliée à l'unité de réception (12) de l'unité maître (1),
chaque unité esclave (3) présentant une première unité de réception (31) reliée au premier parcours de communication et destinée à recevoir des signaux d'information sur le premier parcours de communication (21), une première unité d'émission (32) reliée au premier parcours de communication (21) et destinée à envoyer des signaux d'information sur le premier parcours de communication, une deuxième unité de réception (33) reliée au deuxième parcours de communication (22) et destinée à recevoir des signaux d'information sur le deuxième parcours de communication (22) et une deuxième unité d'émission (34) reliée au deuxième parcours de communication et destinée à émettre des signaux d'information sur le deuxième parcours de communication (22), une unité de traitement (35) dotée d'une entrée et d'une sortie et destinée à traiter les signaux d'information, ainsi qu'un dispositif activable de couplage (37),
l'unité (16) de commande d'émission de l'unité maître (1) étant conçue pour faire envoyer par l'unité d'émission (11) deux signaux d'information qui présentent des champs d'adresse différents et des champs de données identiques qui peuvent présenter une plage de données associées à chaque unité esclave raccordée à la première unité de commutation (41) de l'unité d'interface (4),
la première unité de commutation (41) de l'unité d'interface (4) étant conçue pour, sur la base du contenu du champ d'adresses, délivrer un signal d'information sur le premier parcours de communication (21) et l'autre signal d'information sur le deuxième parcours de communication (22),
le dispositif activable de couplage (32) de chaque unité esclave étant conçu pour, en fonctionnement normal, relier l'entrée de l'unité de traitement (35) à la première unité de réception (31), relier la sortie de l'unité de traitement (35) à la première unité d'émission (32) et relier la deuxième unité de réception (33) à la deuxième unité d'émission (34), et en cas de fonctionnement défectueux de la première unité d'émission (32) et/ou de la deuxième unité de réception (33), pour relier l'entrée de l'unité de traitement (35) à la première unité de réception (31) et la sortie de l'unité de traitement à la deuxième unité d'émission (34), et en cas de fonctionnement défectueux de la première unité de réception (31) et/ou de la deuxième unité d'émission (34), pour relier l'entrée de l'unité de traitement (35) à la deuxième unité de réception (33) et la sortie de l'unité de traitement (35) à la première unité d'émission (32),
l'unité de traitement (35) de chaque unité esclave (3) étant conçue pour traiter la zone de données associée au signal d'information en circulation lors de son traitement,
la deuxième unité de commutation (42) de l'unité d'interface (4) étant conçue pour transmettre successivement à l'unité de réception (12) de l'unité maître (1) les deux signaux d'information qui circulent en sens opposés sur le premier parcours de communication (21) et sur le deuxième parcours de communication (22) et
l'unité (18) de commande de réception de l'unité maître (1) étant conçue pour superposer les champs de données des deux signaux d'information reçus par l'unité de réception.

8. Système de communication selon la revendication 7, dans lequel l'unité de commande (16) de l'unité maître (1) est conçue pour doter de plus les deux signaux d'information d'un champ de comptage placé à une valeur prédéterminée,
l'unité de traitement (35) de l'unité esclave (3) étant conçue pour modifier la valeur du champ de comptage à une valeur prédéterminée lors de la circulation du signal d'information et
l'unité (18) de commande de réception de l'unité maître (1) étant conçue pour évaluer la valeur du champ de comptage des deux signaux d'information reçus par la première unité de réception.

9. Système de communication selon la revendication 8, dans lequel l'unité (18) de commande de réception de l'unité maître est conçue pour additionner les valeurs des champs de comptage des signaux d'information reçus.

10. Système de communication doté d'une structure maître-esclaves et qui présente
une unité maître (1),
plusieurs unités esclaves (3),
une structure (2) en deux anneaux qui travaillent en sens opposés, formée d'un premier parcours de communication (21) et d'un deuxième parcours de communication (22) et
une unité d'interface (4) selon l'une des revendications 1 à 6 qui relie l'unité maître (1) en série avec les différentes unités esclaves (3) par la structure (2) en deux anneaux,
l'unité maître (1) présentant une unité d'émission (11) qui émet des signaux d'information, une unité de réception (12) qui reçoit les signaux d'information, une unité (16) de commande d'émission reliée à l'unité d'émission et une unité (18) de commande de réception reliée à l'unité de réception,
l'unité d'interface (4) présentant la première unité de commutation (41) dont l'entrée (411) est reliée à l'unité d'émission (11) de l'unité maître (1), dont la première sortie (412) est reliée au premier parcours de communication (21) et dont la deuxième sortie (422) est reliée au deuxième parcours de communication (22), et la deuxième unité de commutation (42) dont la première entrée (421) est reliée au premier parcours de communication (21), dont la deuxième entrée (422) est reliée au deuxième parcours de communication (22) et dont la sortie (423) est reliée à l'unité de réception (12) de l'unité maître (1),
chaque unité esclave (3) présentant une première unité de réception (31) reliée au premier parcours de communication et destinée à recevoir des signaux d'information sur le premier parcours de communication (21), une première unité d'émission (32) reliée au premier parcours de communication (21) et destinée à envoyer des signaux d'information sur le premier parcours de communication, une deuxième unité de réception (33) reliée au deuxième parcours de communication (22) et destinée à recevoir des signaux d'information sur le deuxième parcours de communication et une deuxième unité d'émission (34) reliée au deuxième parcours de communication et destinée à émettre des signaux d'information sur le deuxième parcours de communication, une unité de traitement (35) dotée d'une entrée et d'une sortie et destinée à traiter les signaux d'information, ainsi qu'un dispositif activable de couplage (37),
l'unité (16) de commande d'émission de l'unité maître (1) étant conçue pour faire envoyer par l'unité d'émission (11) un signal d'information qui présente un champ de données doté d'une plage de données associées à chaque unité esclave raccordée à la première unité de commutation (41) de l'unité d'interface (4),
la première unité de commutation (41) de l'unité d'interface (4) étant conçue pour dupliquer le signal d'information reçu en provenance de l'unité d'émission (11) de l'unité maître (1) et envoyer un des signaux d'information sur le premier parcours de communication (21) et l'autre signal d'information sur le deuxième parcours de communication (22),
le dispositif activable de couplage (37) de chaque unité esclave (3) étant conçu pour, en fonctionnement normal, relier l'entrée de l'unité de traitement (35) à la première unité de réception (31), relier la sortie de l'unité de traitement (35) à la première unité d'émission (32) et relier la deuxième unité de réception (33) à la deuxième unité d'émission (34), et en cas de fonctionnement défectueux de la première unité d'émission (32) et/ou de la deuxième unité de réception (33), pour relier l'entrée de l'unité de traitement (35) à la première unité de réception (31) et la sortie de l'unité de traitement à la deuxième unité d'émission (34), et en cas de fonctionnement défectueux de la première unité dé réception (31) et/ou de la deuxième unité d'émission (34), pour relier l'entrée de l'unité de traitement (35) à la deuxième unité de réception (33) et la sortie de l'unité de traitement (35) à la première unité d'émission (32),
l'unité de traitement (35) de chaque unité esclave (3) étant conçue pour traiter la zone de données associée au signal d'information en circulation lors de son traitement,
la deuxième unité de commutation (42) de l'unité d'interface (4) étant conçue pour superposer les champs de données des deux signaux d'information qui circulent en sens opposés sur le premier parcours de communication (21) et sur le deuxième parcours de communication (22) et pour les transmettre à l'unité de réception (12) de l'unité maître (1) et
l'unité (18) de commande de réception de l'unité maître (1) étant conçue pour évaluer le signal d'information reçu par l'unité de réception.

11. Système de communication selon la revendication 9, dans lequel l'unité de commande (16) de l'unité maître (1) est conçue pour doter de plus les deux signaux d'information d'un champ de comptage placé à une valeur prédéterminée,
l'unité de traitement (35) de l'unité esclave (3) étant conçue pour modifier la valeur du champ de comptage à une valeur prédéterminée lors de la circulation du signal d'information,
la deuxième unité de commutation (42) de l'unité d'interface (4) étant conçue pour additionner les valeurs des champs de comptage des signaux d'information reçus lors de la superposition des signaux d'information et
l'unité (18) de commande de réception de l'unité maître (1) étant conçue pour évaluer la valeur du champ de comptage du signal d'information reçu par l'unité de réception.

12. Système de communication selon l'une des revendications 7 à 11, dans lequel la deuxième unité de commutation (42) présente un mécanisme FIFO.

13. Système de communication selon l'une des revendications 7 à 12, dans lequel le dispositif activable de couplage (37) de l'unité esclave (3) présente un premier multiplexeur (38) dont la première entrée est reliée à la première unité de réception (31), la deuxième entrée à la deuxième unité de réception (33) et la sortie à l'entrée de l'unité de traitement (35), et un deuxième multiplexeur (39) dont la première entrée est reliée à la deuxième unité de réception (33), la deuxième entrée à la sortie de l'unité de traitement (35) et dont la sortie est reliée à la deuxième unité d'émission (34),
le premier multiplexeur (38) étant conçu pour, en fonctionnement normal, commuter sa première entrée sur sa sortie et, lorsque la première unité de réception (31) et/ou de la deuxième unité d'émission (34) fonctionne(nt) de manière défectueuse, commuter sa deuxième entrée sur sa sortie, le deuxième multiplexeur (39) étant conçu pour commuter sa première entrée sur sa sortie en fonctionnement normal et sa deuxième entrée sur sa sortie lorsque la première unité d'émission (32) et/ou la deuxième unité de réception (33) fonctionne(nt) de manière défectueuse.

14. Système de communication selon l'une des revendications 7 à 13, dans lequel la première unité d'émission (32) et la deuxième unité d'émission (34) et/ou la première unité de réception (31) et la deuxième unité de réception (33) de l'unité esclave (3) sont conçues pour constater la présence d'un défaut dans le parcours de communication qui leur est raccordé et signaler que le fonctionnement est défectueux.
